(19) **Europäisches Patentamt / European Patent Office / Office européen des brevets**

(11) **EP 4 166 927 B1**

(12) **EUROPEAN PATENT SPECIFICATION**

(45) Date of publication and mention of the grant of the patent:
**03.07.2024 Bulletin 2024/27**

(21) Application number: **21202368.3**

(22) Date of filing: **13.10.2021**

(51) International Patent Classification (IPC):
**G01N 19/02** *(2006.01)*

(52) Cooperative Patent Classification (CPC):
**G01N 19/02;** G01N 2203/0005; G01N 2203/0026; G01N 2203/0037

(54) **DEVICE FOR DETERMINING THE COEFFICIENT OF DYNAMIC FRICTION OF FLEXIBLE PLANAR AND/OR LINEAR TEXTILES AND A METHOD FOR DETERMINING THE COEFFICIENT OF DYNAMIC FRICTION**

VORRICHTUNG ZUR BESTIMMUNG DES GLEITREIBUNGSKOEFFIZIENT EINER FLEXIBLEN PLANAREN UND/ODER LINEAREN TEXTILIE UND EIN VERFAHREN ZUR BESTIMMUNG DES GLEITREIBUNGSKOEFFIZIENTEN

APPAREIL DE DÉTERMINATION DU COEFFICIENT DE FROTTEMENT DYNAMIQUE D'UNE TEXTILE PLANAIRE ET/OUT LINÉAIRE ET UN PROCÉDÉ DE DÉTERMINATION DU COEFFICIENT DE FROTTEMENT DYNAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2023 Bulletin 2023/16**

(73) Proprietor: **Technicka univerzita v Liberci**
**460 01 Liberec 1 (CZ)**

(72) Inventors:
• **Kremenakova, Dana**
**460 06 Liberec 6 (CZ)**
• **Militky, Jiri**
**460 06 Liberec 6 (CZ)**
• **Svoboda, Miroslav**
**460 14 Liberec 14 (CZ)**

(74) Representative: **Musil, Dobroslav**
**Dobroslav Musil a partneri s.r.o.**
**Zabrdovicka 11**
**615 00 Brno (CZ)**

(56) References cited:
CN-B- 105 910 982          GB-A- 2 540 516
US-A1- 2003 063 652

## Description

## Technical field

The invention relates to a device for determining the coefficient of dynamic friction of flexible planar and/or linear structures.

The invention relates to a method for determining the coefficient of dynamic friction of flexible planar and/or linear structures.

## Background art

The coefficient of dynamic friction is a physical quantity describing the dynamic friction of different materials under contact stress during their mutual movement. This coefficient is used, for example, in the evaluation of various textile materials (linear or planar), e.g., in determining or verifying their applicability for different applications (production of parachutes, safety belts, tyres, conveyor belts, etc.) or their processability by different technologies (by which these materials have not yet been processed or have been processed under different conditions - e.g., high-speed spinning technology), etc.

Patent CZ 301502 discloses a method of determining the static and dynamic coefficient of friction of a longitudinal structure and a measuring device for performing the method. The device comprises at least one conductor with a curved-cylindrical surface, e.g., a knitting hook, intended for being wrapped by the monitored longitudinal structure, a sensor of tensile force connected to a recording and/or evaluation device and a device for inducing a reciprocal uniform movement of the monitored longitudinal structure. To determine the coefficient of friction, the longitudinal structure to be monitored is wrapped around the cylindrical surface of at least one conductor, whereby at one end it is connected to the sensor of tensile force and at the other end, a suitable weight is suspended to create preload. Thereafter, the longitudinal structure moves uniformly reciprocally in both directions of its length by the action of the device for reciprocating uniform movement, the magnitude of the tensile force acting therein being measured by the sensor of tensile force. This procedure determines a pair of tensile forces, one of which is greater by the effect of friction between the longitudinal structure and the conductor(s) and the other is less by the effect of friction between the longitudinal structure and the conductor(s), whereupon from the measured values of tensile forces and the magnitude of the wrapping angle of the longitudinal structure around each of the conductors, the resulting magnitude of the coefficient of friction between the longitudinal structure and the conductor(s) is calculated for each of the tensile forces on the basis of Euler's formula.

The disadvantage of this measuring device and method for determining the static and dynamic coefficient of friction is the fact that they are not suitable for determining the coefficient of dynamic friction during continuous friction with long duration and/ or at a high speed of the movement of the longitudinal structure, because the testing time and the speed of the longitudinal structure are limited by the length of the monitored longitudinal structure and by the fact that this structure performs a reciprocating movement, during which it stops at dead ends, where the direction of its movement changes. Another disadvantage of the device is the fact that it does not allow to simply test the mutual dynamic friction of two longitudinal structures - different or identical.

Patent CN 105910982 B discloses a method for measuring the friction coefficient of a hoist friction pad based on curved surface method and a device for measuring the friction coefficient. The device comprises a rotational means adapted to receive the hoist friction pad and to perform reciprocating rotational movement within defined angle, and two sensors of tensile force fixed to ends of hoist wire rope, for monitoring friction force acting between the wire rope and the pad. The sensors are arranged on opposite sides of the rotational means to monitor static and dynamic friction during the reciprocating movement. Main disadvantage of this device is that it cannot perform uninterrupted one-directional long-lasting high-speed rotation testing and to monitor changes of coefficient of dynamic friction during such testing.

Patent application GB 2540516 A discloses steel wire rope interlayer friction detection apparatus and method for a winding-type hoist. The apparatus comprises a support, a loading steel wire rope positioning system, a connector-free steel wire rope positioning system, a brake system, a power loading system and a state monitoring system, which are provided on the support. By means of a fixed pulley positioning apparatus and a loading manner of an electric pull rod controlled by a computer, a stable steel wire rope contact load can be continuously applied, and a friction force, a temperature field and a friction coefficient between steel wire ropes and an expanding law of internal cracks inside the steel wire ropes are monitored in real time. Disadvantage of this device is that it cannot be used for testing samples of flexible flat structures, e.g. a piece of textile cord, a piece of textile belt, a textile fiber bundle, etc., which are relatively thin and are keen to deformations like stretching and/or scrunching when mutually rubbed. Another disadvantage of this device is that it does not simply and accurately measure friction force acting in the loading steel wire rope, but the friction force is calculated by means of torque variation measured by a dynamic torque rotation speed sensor.

Patent application US 2003063652 A1 discloses a disc tribometer for measuring tribological, mechanical and thermal phenomena including at least a first rotary support for receiving a test sample, a second rotary support for receiving a second test sample, means for measuring torque applied to each of the supports, and at least one induction coil positioned to heat one of the test samples. The tribometer furthermore comprises a py-

rometer positioned so as to record the thermal radiation produced at the interface of the two test samples. Disadvantage of this device is that it cannot be used for testing flexible flat structures, e.g. a piece of textile cord, a piece of textile belt, a textile fiber bundle, etc., particularly because it is not equipped with means for receiving and tensioning such structures.

The objective of the invention is a device for determining the coefficient of dynamic friction during friction of flexible planar and/or linear structures and a method for determining the coefficient of dynamic friction which would eliminate the disadvantages of the background art.

**Principle of the invention**

The objective of the invention is achieved by a device for determining the coefficient of dynamic friction of flexible planar and/or linear textiles, which comprises a sensor of tensile force acting in a first flexible planar or linear textile which is connected to a computing unit provided with means for determining the coefficient of dynamic friction of the surfaces of two flexible planar or linear textiles, and further comprises a tensioning means for tensioning the first flexible planar or linear structure by tension force. A friction drum coupled to a drive for rotational movement about a longitudinal axis at a constant speed of 50 to 5000 revolutions per minute in a direction away from the sensor of tensile force towards the tensioning means is mounted transversely rotatably between the sensor of tensile force and the tensioning means, the friction drum being provided with means for temporarily arranging a second flexible planar or linear textile on its surface, in such a manner that it covers at least a part of the friction drum surface around its entire circumference. The sensor of tensile force is connected to a computing unit provided with means for determining the coefficient of dynamic friction of the surfaces of the two flexible planar or linear textiles. This device, in contrast to the devices known from the background art, can be used to determine the coefficient of dynamic friction of the surfaces of two flexible planar and/or linear textiles, wherein the length of the continuous operation of the device is essentially arbitrary and limited only by the resistance of the tested materials.

In a preferred embodiment of the device according to the invention, the tensioning means is coupled to a sensor of tension force which is connected to the computing unit that makes it possible to correct the effect of possible vibrations of the friction drum on the tensile force measured by the sensor and to automatically detect rupture of the first, rubbed, flexible planar or linear textile.

In a preferred embodiment of the device according to the invention, the friction drum is hollow, the means for arranging the second flexible planar or linear textile on its surface being accommodated in its inner space. At the same time, a longitudinal slot is formed in the shell of the hollow friction drum for introducing the second flexible planar or linear textile to these means.

The actual speed of the friction drum during the determination of the coefficient of dynamic friction is influenced by the resistance of dynamic friction and is therefore lower than the pre-set idle speed. In a preferred embodiment, therefore, the friction drum is associated with a speed sensor connected to the computing unit provided with means for detecting the speed of movement of the surface of the second, frictional, flexible planar or linear textile over the surface of the first, rubbed, flexible planar or linear textile, so that the actual speed of the dynamic friction of the surfaces of the two flexible planar or linear textiles can be monitored, analysed and, if necessary, controlled.

The temperature of the rubbed flexible planar or linear textile, especially during long-term continuous testing, can temporarily or permanently affect the structure of the material and thus the magnitude of the dynamic friction coefficient. In a preferred embodiment, the friction drum is associated with a pyrometer for determining the temperature of the first, rubbed, flexible planar or linear textile. The pyrometer is preferably oriented perpendicularly or substantially perpendicularly to the surface of the friction drum, or it is oriented to the surface of the friction drum at an angle at which it has been calibrated for determining the temperature of the first flexible planar or linear textile The pyrometer is connected to the computing unit provided with means for determining the temperature of the surface of the first flexible planar or linear textile at the place of its wrapping around the friction drum.

When determining the coefficient of dynamic friction of various combinations of surfaces and materials of flexible planar and/or linear textiles, it is advantageous if it is possible to adjust the magnitude of the tensile force, thus achieving greater reliability of measurement by the sensor of tensile force, slower wear of rubbed materials, etc. In a preferred variant of embodiment, therefore, the sensor of tensile force is coupled to a clamping element for clamping the first flexible planar or linear textile with the possibility of movement, e.g., by being coupled to a positioning element for setting the angle of the wrapping of the friction drum by the first flexible planar or linear textile, etc.

Furthermore, the objective of the invention is also achieved by a method for determining the coefficient of dynamic friction of flexible planar and/or linear textiles, in which the first flexible planar or linear textile, which is at one end connected to the sensor of tensile force mounted in the frame of the device of the invention and at the other end it is loaded by a predetermined tension force, presses against the surface of the second planar or linear textile arranged on the surface of the rotating friction drum, wherein the sensor of tensile force measures the tensile force acting on this end of the first flexible planar or linear textile and from the known tension force and the measured tensile force, the coefficient of dynamic friction is determined according to the formula

$$f = \frac{\ln\frac{F_t}{F_n}}{\propto},$$

where f is the coefficient of dynamic friction of the surfaces of the given flexible planar and/or linear textiles, $F_t$ is the tensile force acting in the first flexible planar or linear structure, is the tension force, by which the first flexible planar or linear textile is preloaded by the tensioning means, and $\alpha$ is the angle of the wrapping of the friction drum by the first flexible planar or linear textile in radians. Thus, in contrast to the methods known from the background art, it is possible to determine the coefficient of dynamic friction during uninterrupted, essentially long-lasting friction of surfaces of two flexible planar or linear textiles and/or during friction of surfaces of two flexible planar or linear textiles at high speeds.

**Description of the drawings**

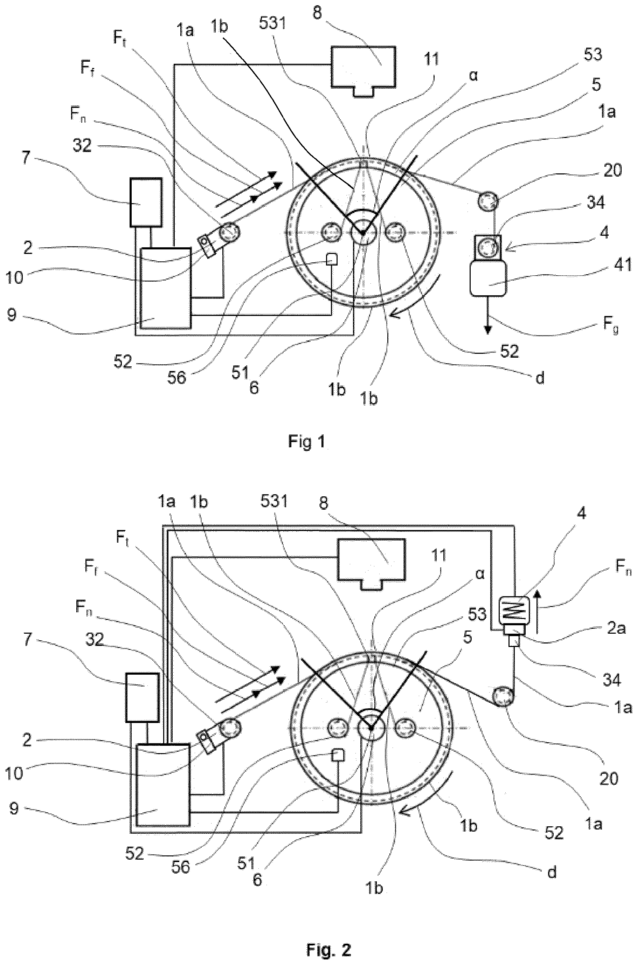

In the accompanying drawings, Fig. 1 is a schematic cross-sectional view of a first exemplary variant of the device for determining the coefficient of dynamic friction of flexible planar and/or linear structures according to the invention, and Fig. 2 is a cross-sectional view of a second exemplary variant of the device.

**Examples of embodiment**

The device for determining the coefficient f of dynamic friction of flexible planar and/or linear structures 1a, 1b and the method of determining the coefficient f of dynamic friction according to the invention will be explained with reference to two exemplary variants of this device shown in Figs. 1 and 2 and their function.

The device for determining the coefficient of dynamic friction f of flexible planar and/or linear structures 1a, 1b, comprises a sensor 2 of tensile force $F_t$ acting in a first flexible planar or linear structure 1a. The sensor 2 of tensile force $F_t$ is provided with a suitable fastening means 32 for fastening the first flexible planar or linear structure 1a, such as a spring clamp, a hook, or another suitable fastening means for fixing the linear or planar structure. The device for determining the dynamic friction coefficient f further comprises a tensioning means 4 for loading the first flexible planar or linear structure 1a with a predetermined tension force $F_n$, the tensioning means 4 being provided with a fastening means 34 for fixing the first flexible planar or linear structure 1a.

A friction drum 5 with a horizontally oriented longitudinal axis 51 is mounted transversely rotatably in an unillustrated frame of the device between the sensor 2 of tensile force $F_t$ and the tensioning means 4. The friction drum 5 is coupled to a drive 6 for rotatable movement about its longitudinal axis 51, which is coupled to a control unit 7. The drive 6 of the friction drum 5 preferably has adjustable speeds - for example, it is formed by an electric motor equipped with a frequency converter, etc. The friction drum 5 is provided with means for temporarily arranging a second flexible planar or linear structure 1b on its outer surface. In the preferred variant shown in Figs. 1 and 2, the friction drum 5 is hollow and the means for arranging the second flexible planar or linear structure 1b are accommodated in its inner space. Such means include, for example, at least two longitudinal swivel pins 52 provided with unillustrated spring clamps and/or slots for fastening the second flexible planar or linear structure 1b. The swivel pins 52 are arranged in the inner space of the friction drum 5 parallel with its longitudinal axis 51. In this case, in addition, a slot 531 is formed in the shell 53 of the friction drum 5 for introducing the second flexible planar or linear structure 1b to the means for arranging it which are accommodated in the inner space of the friction drum 5. In other variants, other means can be used for mounting the second flexible planar or linear structure 1b on the surface of the friction drum 5, it is also possible to use other means which will not interfere with its structure. These means can be arranged in the inner space of the friction drum 5 (e.g., at least one clamp provided with a tensioning arm), or on the surface of the friction drum 5 (e.g., a Velcro fastener, glue layer, etc.).

The friction drum 5 is preferably associated with at least one known speed sensor 56, e.g., electromagnetic inductive sensor for sensing a metallic element of the friction drum 5, e.g., of a metallic longitudinal swivel pin 52, a laser sensor for sensing an unillustrated reference mark located on the surface of the shell 53 or of the face of the friction drum 5, etc. In addition, the friction drum 5 is preferably associated with a pyrometer 8 oriented, for example, perpendicularly or substantially perpendicularly to the shell 53 of the friction drum 5, and located at the place 11 of the wrapping of the friction drum 5 by the first planar or linear flexible planar or linear structure 1a.

The sensor 2 of tensile force $F_t$ and optionally also the speed sensor 56 and/or the pyrometer 8 is/are connected to a computing unit 9 of the device for determining the coefficient f of dynamic friction, which is provided with means for determining the coefficient f of dynamic friction and, optionally, also with means for determining other parameters of at least one of the flexible planar or linear structures 1a, 1b, of rotation speed of the friction drum 5, etc. The computing unit 9 is preferably connected to a control unit 7 of a drive 6 of the friction drum 5 and is provided with means for controlling the control unit 7.

In the variant of the device shown in Fig. 1, the tensioning means 4 for loading the first flexible planar or linear structure 1a is formed by a tensioning weight 41 provided with a fastening means 34 for fastening it to the first flexible planar or linear structure 1a. The tension force $F_n$ acting on the first flexible planar or linear structure 1a in the rest state of the device then corresponds to the gravitational force $F_g$ acting on the tensioning weight 41.

In the variant of the device shown in Fig. 2, the tensioning means 4 is formed by a device for regulating the force, e.g., based on a spring and/or a lever, or a lever equipped with a sliding and/or interchangeable weight, which allows a more variable adjustment of the tension force $F_n$, or its change during the determination of the coefficient $f$ of dynamic friction. In the illustrated variant of embodiment, the tensioning means 4 is oriented vertically upwards, but in variants not shown, it can be oriented substantially arbitrarily differently. The advantage of the upward orientation of the tensioning means 4 is the reduction of the build-up area of the device. In this variant, the device for determining the coefficient $f$ of dynamic friction is provided with a sensor 2a of tension force $F_n$ in the first flexible planar or linear structure 1a when tensioned by the tensioning means 4. The sensor 2a of tension force $F_n$ is arranged between the tensioning means 4 and the fastening means 34 for fixing the first flexible planar or linear structure 1a and is connected to the computing unit 9. The tension force $F_n$ measured by the sensor 2a of tension force $F_n$ corresponds to the force set on the tensioning means 4. The tensioning means 4 is, for example, connected to the computing unit 9.

The advantage of the variant shown in Fig. 2 is the fact that a combination of the sensor 2 of tensile force $F_t$ and the sensor 2a of tension force $F_n$ allows to correct distortion of the tensile force $F_t$ measured by the sensor 2 of tensile force $F_t$ caused by vibrations which are transmitted to the first flexible planar or linear structure 1a from the rotating friction drum 5. The currently measured tension force $F_{na}$ is in the computing unit 9 compared to the value of the tension force $F_n$ set by the tensioning means 4 and then, during the measurement, the computing unit 9 performs correction of the effect of the vibrations of the rotating friction drum 5.

The sensor 2 of tension force $F_n$ is mounted in the device frame, for example, by means of a positioning element 10, which allows the sensor 2 and with it also the clamping point of the first flexible planar or linear structure 1a to be placed in any position relative to the friction drum 5 and thus change, e.g., the angle $\alpha$ of the wrapping of the friction drum 5 by the first flexible planar or linear structure 1a. The positioning element 10 is designed, for example, as a horizontally oriented sliding and/or swivel pin with a locking screw, etc. The angle $\alpha$ of the wrapping of the friction drum 5 by the first flexible planar or linear structure 1a is preferably adjustable in the range of 10 ° to 140 °, more preferably in the range of 22 ° to 105 °, or otherwise, as required.

If necessary, the device for determining the coefficient $f$ of dynamic friction at the guide point of the first flexible planar or linear structure 1a is provided with (fixed or rotatable) guide element/elements 20. In the variant shown in Fig. 2, such a guide element 20 is arranged between the friction drum 5 and the tensioning means 4 and serves to change the guiding direction of the first flexible planar or linear structure 1a.

When determining the coefficient $f$ of dynamic friction using the above-described device according to the invention, the second flexible linear structure 1b, such as a textile cord, a textile belt, a textile fiber bundle, a glass fiber bundle, a yarn, a thread, etc., or a flat structure, such as a strip of sheet metal, leather, plastic foil, sandpaper, etc., is arranged on the outer surface of the friction drum 5 preferably in such a manner that it covers at least a part of its surface around its entire circumference. Subsequently, the surface of the friction drum 5 with the second flexible planar or linear structure 1b arranged at a defined angle $\alpha$ is wrapped by the first flexible planar or linear structure 1a, which may or may not be the same as the second flexible planar or linear structure 1b. At the same time, the first flexible planar or linear structure 1a is fixed at one end in the fastening means 32 coupled to the sensor 2 of tensile force $F_t$ and at the other end in the fastening means 34 coupled to the tensioning means 4. The tensioning means 4 is loaded with a predetermined tension force $F_n$. The friction drum 5 is then set into rotational movement about its longitudinal axis 51 at a constant speed of 50 to 5000 revolutions per minute in a direction $d$ away from the sensor 2 of tensile force $F_t$ towards the tensioning means 4 (see arrow d in Figs. 1 and 2). In doing so, the surface of the first flexible planar or linear structure 1a rubs the surface of the second flexible planar or linear structure 1b arranged on the surface of the friction drum 5, as a result of which a frictional force Ff induced by the effect of this dynamic friction is induced in the first flexible planar or linear structure 1a, which acts in the same direction as the tension force $F_n$ and which combines with the tension force $F_n$ to form the resulting tensile force $F_t$ measured by the sensor 2 of tensile force $F_t$. The magnitude of the tensile force $F_t$ measured/being measured by the sensor 2 of tensile force $F_t$ is stored, or continuously stored, in the computing unit 9 and then the coefficient $f$ of dynamic friction is determined, or continuously determined, by the computing unit 9 according to the following formula derived from the Euler relation:

$$f = \frac{\ln\frac{F_t}{F_n}}{\alpha},$$

where $f$ is the coefficient of dynamic friction of the surfaces of the given flexible planar and/or linear structures 1a, 1b, $F_t$ is the tensile force sensed by the sensor 2 of tensile force acting in the first flexible planar or linear structure 1a, $F_n$ is the tension force by which the first flexible planar or linear structure 1a is preloaded by the tensioning means 4 and $\alpha$ is the angle of the wrapping of the friction drum 5 by the first flexible planar or linear structure 1a in radians.

In case of need, the rotation speed of the friction drum 5 can be changed during the measurement. If the device for determining the coefficient f of dynamic friction is provided with the speed sensor 56 of the friction drum 5, it is possible, simultaneously with the determining of the coefficient f of dynamic friction, to determine the speed of the movement of the second flexible planar or linear structure 1b on the surface of the first flexible planar or linear structure 1a from the actual revolutions of the friction drum 5, or determine the speed of the movement, or adjust the speed to a required value during the measurement by means of controlling the drive 6 of the friction drum 5 by the control unit 7.

If the device for determining the coefficient f of dynamic friction is provided with the pyrometer 8, it is possible, during the determination of the coefficient f of dynamic friction, to measure the temperature or a change in the temperature of the first flexible planar or linear structure 1a at the place of contact with the second flexible planar or linear structure 1b and, if appropriate, to monitor the dependency of the coefficient f of dynamic friction on the temperature, or vice versa.

The device for determining the coefficient of dynamic friction allows to test the dynamic friction of the surfaces of the two flexible planar or linear structures 1a, 1b for essentially any time, limited only by the resistance of the rubbed materials to frictional wear, while it is possible to simulate the actual conditions of dynamic friction of these structures.

**List of references**

| 1a | First flexible planar or linear structure |
| 1b | Second flexible planar or linear structure |
| 11 | Place of wrapping |
| 2 | Sensor of tensile force |
| 2a | Sensor of tension force |
| 32 | Fastening means |
| 34 | Fastening means |
| 4 | Tensioning means |
| 41 | Tension weights |
| 5 | The friction drum |
| 51 | Axis of the friction drum |
| 52 | Longitudinal swivel pin |
| 53 | Shell of the friction drum |
| 531 | Slot in the shell of the friction drum |
| 56 | Speed sensor |
| 6 | Drive of the friction drum |
| 7 | Control unit |
| 8 | Pyrometer |
| 9 | Computing unit |
| 10 | Positioning element |
| 20 | Guiding element |
| $F_g$ | Gravitational force of the tensioning means |
| $F_n$ | Tension force |
| $F_t$ | Tensile force |
| $F_f$ | Friction force |
| $\alpha$ | Wrapping angle |
| d | Direction of the drum rotation |
| f | Coefficient of dynamic friction |

**Claims**

1. A device for determining the coefficient of dynamic friction of flexible planar and/or linear textiles (1a, 1b), wherein it comprises a sensor (2) of tensile force acting in the first flexible planar or linear textile (1a), a tensioning means (4) for tensioning the first flexible planar or linear textile (1a) by tension force ($F_n$), wherein between the sensor (2) of tensile force (Ft) and the tensioning means (4), a transversely rotatably mounted friction drum (5) is coupled to a drive (6) for rotational movement about the longitudinal axis (51) of the friction drum (5) at a constant speed of 50 to 5000 revolutions per minute in a direction (d) away from the sensor (2) of tensile force (Ft) towards the tensioning means (4), wherein the friction drum (5) is provided with means for temporarily arranging a second flexible planar or linear textile (1b) on its surface, in such a manner that it covers at least a part of the friction drum (5) surface around its entire circumference, the sensor (2) of tensile force being connected to a computing unit (9) provided with means for determining the coefficient (f) of dynamic friction of the surfaces of the two flexible planar or linear textiles (1a, 1b).

2. The device according to claim 1, **characterized in that** the tensioning means (4) is coupled to a sensor (2a) of tension force ($F_n$) which is connected to the computing unit (9).

3. The device according to claim 1, **characterized in that** the friction drum (5) is hollow, wherein the means for arranging the second flexible planar or the linear textile (1b) on its surface are accommodated in its inner space and a longitudinal slot (531) is formed in its shell (53) for introducing a second flexible planar or linear textile (1b) to these means.

4. The device according to claim 1 or 3, **characterized in that** the friction drum (5) is associated with a speed sensor (56) connected to the computing unit (9).

5. The device according to claim 1, 3 or 4, **characterized in that** the friction drum (5) is associated with a pyrometer (8) oriented perpendicularly or substantially perpendicularly to the surface of the friction drum (5), the pyrometer (8) being connected to the computing unit (9).

6. The device according to claim 1, **characterized in that** the sensor (2) of tension force $F_n$ is mounted in the device with the possibility of movement.

7. A method for determining the coefficient (f) of dynamic friction of flexible planar and/or linear textiles (1), wherein a first flexible planar or linear textile (1a), which is at one end connected to the sensor (2) of tensile force (Ft) mounted in the frame of the device of any of claims 1-6 and at the other end it is loaded by a predetermined tension force ($F_n$), presses against the surface of a second flexible planar or linear textile (1b) arranged on the surface of the friction drum (5) in such a manner that it covers at least a part of the friction drum (5) surface around its entire circumference, the friction drum (5) rotating about its longitudinal axis (51) at a constant speed of 50 to 5000 revolutions per minute in a direction away from the sensor (2) of tensile force ($F_t$) towards the tensioning means (4), whereby the sensor (2) of tensile force (Ft) measures the tensile force (Ft) acting on this end of the first flexible planar or linear textile (1a) and from the known tension force ($F_n$) and the measured tensile force (Ft), the coefficient (f) of dynamic friction is determined according to the formula

$$f = \frac{\ln\frac{F_t}{F_n}}{\propto},$$

where f is the coefficient of dynamic friction of the surfaces of the given flexible planar or linear textiles (1a, 1b), Ft is the tensile force acting in the first flexible planar or linear textile (1a), $F_n$ is the tension force by which the first flexible planar or linear textile (1a) is preloaded by a tensioning means (4), and $\alpha$ is the angle of the wrapping of the friction drum (5) by the first longitudinal flexible planar or linear textile (1a) in radians.

**Patentansprüche**

1. Einrichtung zur Ermittlung des dynamischen Reibungskoeffizienten von flexiblen Flächen- und/oder Lineartextilien (1a, 1b), wobei diese Einrichtung einen Sensor (2) der Zugkraft, die in der ersten flexiblen Flächen- oder Lineartextilie (1a) wirkt, Spannmittel (4) zum Spannen der ersten flexiblen Flächen- oder Lineartextilie (1a) mit einer Spannkraft ($F_n$) aufweist, wobei zwischen diesem Sensor (2) der Zugkraft (Ft) und dem Spannmittel (4) eine Reibtrommel (5) quer drehbar gelagert ist, die mit einem Antrieb (6) zur Drehbewegung um die Längsachse (51) der Reibtrommel (5) herum mit einer konstanten Geschwindigkeit von 50 bis 5000 Drehzahl pro Minute in der Richtung von dem Sensor (2) der Zugkraft (Ft) zum Spannmittel (4) hin verkoppelt ist, wobei diese Reibtrommel (5) die Mittel zur vorübergehenden Lagerung der zweiten flexiblen Flächen- oder Lineartextilie (1b) auf ihrer Oberfläche derart aufweist, dass sie mindestens einen Teil der Oberfläche der Reibtrommel (5) auf ihrem ganzen Umfang abdeckt, wobei der Sensor (2) der Zugkraft (Ft) mit einer Recheneinheit (9) verkoppelt ist, die die Mittel zur Ermittlung des dynamischen Reibungskoeffizienten (f) von Oberflächen von zwei flexiblen Flächen- oder Lineartextilien (1a, 1b) aufweist.

2. Einrichtung nach dem Anspruch 1, **dadurch gekennzeichnet, dass** das Spannmittel (4) mit dem Sensor (2a) der Spannkraft ($F_n$) verkoppelt ist, der mit der Recheneinheit (9) verkoppelt ist.

3. Einrichtung nach dem Anspruch 1, **dadurch gekennzeichnet, dass** die Reibtrommel (5) hohl ist, wobei die Mittel zur Lagerung der zweiten flexiblen Flächen- oder Lineartextilie (1b) auf ihrer Oberfläche in ihrem Innenraum gelagert sind und in ihrem Mantel (53) ein Längsspalt (531) zur Einführung der zweiten flexiblen Flächen- oder Lineartextilie (1b) zu diesen Mitteln gebildet ist.

4. Einrichtung nach dem Anspruch 1 oder 3, **dadurch gekennzeichnet, dass** der Reibtrommel (5) ein Drehzahlsensor (56) zugeordnet ist, der mit der Recheneinheit (9) verkoppelt ist.

5. Einrichtung nach dem Anspruch 1, 3 oder 4, **dadurch gekennzeichnet, dass** der Reibtrommel (5) ein Pyrometer (8) zugeordnet ist, das zur Oberfläche der Reibtrommel (5) senkrecht oder im Grunde genommen senkrecht gerichtet ist, wobei das Pyrometer (8) mit der Recheneinheit (9) verkoppelt ist.

6. Einrichtung nach dem Anspruch 1, **dadurch gekennzeichnet, dass** der Sensor (2) der Spannkraft ($F_n$) in der Einrichtung mit der Möglichkeit einer Bewegung gelagert ist.

7. Verfahren zur Ermittlung des dynamischen Reibungskoeffizienten (f) von flexiblen Flächen- und/oder Lineartextilien (1), wobei die erste flexible Flächen- oder Lineartextilie (1a), die mit einem ihrer Enden an den Sensor (2) der Zugkraft (Ft) angeschlossen ist, der im Rahmen der Einrichtung nach einem der Ansprüche 1 bis 6 gelagert ist, und an ihrem anderen Ende durch eine vorbestimmte Spannkraft ($F_n$) belastet ist, an die Oberfläche der zweiten flexiblen Flächen- oder Lineartextilie (1b) angepresst wird, die auf der Oberfläche der sich drehenden Reibtrommel (5) derart gelagert ist, dass sie mindestens einen Teil der Oberfläche der Reibtrommel (5) auf ihrem ganzen Umfang abdeckt, die Reibtrommel (5) sich um ihre Längsachse (51) herum mit einer konstanten Geschwindigkeit von 50 bis 5000 Drehzahl pro Minute in der Richtung von dem Sensor (2) der Zugkraft (Ft) zum Spannmittel (4) hin dreht, wobei mit dem Sensor (2) der Zugkraft (Ft) die Zugkraft (Ft) gemessen wird, die auf dieses Ende der ersten flexiblen Flächen- oder Lineartextilie (1a) wirkt und aus der bekannten Spannkraft ($F_n$) und der zu messenden Zugkraft (Ft) der dynamische Reibungskoeffizient (f) laut Formel

$$f = \frac{\ln\frac{F_t}{F_n}}{\alpha},$$

ermittelt wird, wo f dynamischer Reibungskoeffizient von Oberflächen der jeweiligen flexiblen Flächen- oder Lineartextilien (1a, 1b), Ft Zugkraft, die in der ersten flexiblen Flächen- oder Lineartextilie (1a) wirkt, $F_n$ Spannkraft, mit der die erste flexible Flächen- oder Lineartextilie (1a) mit Hilfe des Spannmittels (4) vorgespannt wird, und $\underline{\alpha}$ Winkel des Umschlingens der Reibtrommel (5) mit der ersten flexiblen Längstextilie (1a) in Radianten sind.

**Revendications**

1. Dispositif de détection du coefficient de frottement dynamique de textiles souples plats et/ou linéaires (1a, 1b), tandis que le dispositif comprend un capteur (2) de force de traction qui agit sur le premier tissu souple plat ou linéaire (1a), un dispositif de tension (4) pour tendre le premier tissu souple plat ou linéaire (1a) par la force de tension ($F_n$), tandis qu'entre ce capteur (2) de force de traction (Ft) et le dispositif de tension (4) est disposé de manière transversale et rotative un tambour de friction (5) couplé à un actionneur (6) qui permet le déplacement en rotation autour de l'axe longitudinal (51) du tambour de friction (5) à une vitesse constante de 50 à 5000 tours par minute dans la direction du capteur (2) de force de traction (Ft) vers le dispositif de tension (4), tandis que ce tambour de friction (5) est pourvu de moyens qui permettent de poser temporairement le second tissu souple plat ou linéaire (1b) sur sa surface de manière à couvrir au moins une partie de la surface du tambour de friction (5) sur toute sa circonférence, tandis que le capteur (2) de force de traction (Ft) est connecté à une unité de calcul (9) pourvue de moyens pour détecter le coefficient (f) de frottement dynamique des surfaces des deux textiles souples plats ou linéaires (1a, 1b).

2. Dispositif selon la revendication 1, **caractérisé en ce que le** dispositif de tension (4) est couplé à un capteur (2) de force de tension ($F_n$) qui est connecté à une unité de calcul (9).

3. Dispositif selon la revendication 1, **caractérisé en ce que** le tambour de friction (5) est creux, tandis que les moyens qui permettent de poser le second tissu souple plat ou linéaire (1b) sur sa surface sont disposés dans son intérieur, et une fente longitudinale (531) est formée dans son enveloppe (53) pour introduire le second tissu souple plat ou linéaire (1b) dans ces moyens.

4. Dispositif selon la revendication 1 ou 3, **caractérisé en ce que** le tambour de friction (5) est muni d'un capteur (56) de vitesse connecté à une unité de calcul (9).

5. Dispositif selon la revendication 1, 3 ou 4, **caractérisé en ce que** le tambour de friction (5) est pourvu d'un pyromètre (8) orienté perpendiculairement ou sensiblement perpendiculairement à la surface du tambour de friction (5), tandis que le pyromètre (8) est connecté à une unité de calcul (9).

6. Dispositif selon la revendication 1, **caractérisé en ce que** le capteur (2) de force de tension $F_n$ est disposé dans le dispositif avec la possibilité de se déplacer.

7. Procédé de détection du coefficient (f) de frottement dynamique de textiles souples plats et/ou linéaires (1), tandis que le premier tissu souple plat et/ou linéaire (1a), lié par l'une de ses extrémités à un capteur (2) de force de traction (Ft) disposé dans le bâti du dispositif selon l'une des revendications de 1 à 6, et chargé à son autre extrémité d'une force de tension prédéterminée ($F_n$), est pressé contre la surface du second tissu souple plat ou linéaire (1b) disposé sur la surface du tambour de friction en rotation (5), de manière à couvrir au moins une partie de la surface du tambour de friction (5) sur toute sa circonférence, le tambour de friction (5) tournant autour de son axe longitudinal (51) à une vitesse constante de 50 à 5000 tours par minute dans la direction du capteur (2) de force de traction (Ft) vers le moyen de tension (4), tandis que le capteur (2) de force de traction (Ft) mesure la force de traction (Ft) agissant sur cette extrémité du premier tissu souple plat ou linéaire (1a) et le coefficient (f) de frottement dynamique est déterminé à partir de la force de traction connue ($F_n$) et de la force de traction mesurée (Ft) selon la formule suivante

$$f = \frac{\ln\frac{F_t}{F_n}}{\alpha},$$

où f est le coefficient de frottement dynamique des surfaces des textiles souples plats ou linéaires donnés (1a, 1b), Ft est la force de traction agissant dans le premier tissu souple plat ou linéaire (1a), $F_n$ est la force de tension par laquelle le premier tissu souple plat ou linéaire (1a) est tendu par le dispositif de tension (4), et a est l'angle de ceinturage du tambour de friction (5) par le premier tissu souple longitudinal (1a) en radians.

Fig 1

Fig. 2

**EP 4 166 927 B1**

**REFERENCES CITED IN THE DESCRIPTION**

**Patent documents cited in the description**

- CZ 301502
- CN 105910982 B
- GB 2540516 A
- US 2003063652 A1